# EUROPÄISCHE PATENTSCHRIFT

(11) **EP 3 018 044 B1**
(45) Veröffentlichungstag und Bekanntmachung des Hinweises auf die Patenterteilung: **14.08.2019**
(21) Anmeldenummer: 15193058.3
(22) Anmeldetag: 04.11.2015
(51) Int. Cl.: B62H 5/10

(54) **TRETLAGERVORRICHTUNG, FAHRRAD MIT MINDESTENS EINER TRETLAGERVORRICHTUNG UND SYSTEM ZUR LOKALISIERUNG MINDESTENS EINES FAHRRADES**
BOTTOM BRACKET DEVICE, BICYCLE WITH AT LEAST ONE BOTTOM BRACKET DEVICE AND SYSTEM FOR LOCATING AT LEAST ONE BICYCLE
DISPOSITIF DE PALIER DE PEDALIER, VELO COMPRENANT AU MOINS UN DISPOSITIF DE PALIER DE PEDALIER ET SYSTEME DE LOCALISATION D'AU MOINS UN VELO

(30) Priorität: 05.11.2014 DE 102014222620
(43) Veröffentlichungstag der Anmeldung: 11.05.2016
(73) Patentinhaber: Fraunhofer-Gesellschaft zur Förderung der angewandten Forschung e.V., 80686 München (DE)
(72) Erfinder: Tcholtchev, Nikolay, 10249 Berlin (DE); Hoffmann, Andreas, 14513 Teltow (DE); Rennoch, Axel, 10629 Berlin (DE); deGünther, Dirk, 10717 Berlin (DE)
(74) Vertreter: Maikowski & Ninnemann Patentanwälte Partnerschaft mbB

(56) Entgegenhaltungen:
- DE-A1-102008 056 546
- DE-A1-102011 079 094
- DE-A1-102013 013 087
- US-A1- 2011 109 206

## Beschreibung

Die Erfindung betrifft eine Tretlagervorrichtung mit den Merkmalen des Anspruchs 1, ein Fahrrad mit den Merkmalen des Anspruchs 16 und ein System zur Lokalisierung mindestens eines Fahrrades mit den Merkmalen des Anspruchs 17.

Systeme zum gesicherten Abstellen von Fahrädern sind z.B. in Form eines "Call-a-Bike" Dienstes bekannt. In der EP 1 821 266 A1 wird u.a. ein solches System beschrieben. Diese Systeme setzen häufig eine stationäre Abstellmöglichkeit voraus, was die Nutzbarkeit einschränkt. Externe Schlösser, die ein Abstellen des Fahrrades an einem beliebigen Ort erlauben, werden in der Praxis leicht geknackt.

Die DE 10 2013 013087 A1 offenbart die Präambel des Anspruchs 1 und beschreibt ein Fahrrad mit einem Rahmen und mit einem am Rahmen angeordneten Tretlager. Eine in einem Sattelrohr des Fahrrades angeordnete Verriegelungseinrichtung ist für das Tretlager als Diebstahlschutz vorgesehen, derart dass das Tretlager mittels der Verriegelungseinrichtung sperrbar und/oder freigebbar ist. Die Verriegelungseinrichtung ist mittels eines ID-Gebers steuerbar.

In der DE 10 2008 056206 A1 ist ein Entleihsystem für Fahrräder beschrieben, bei dem nach Entrichten eines Pfand- und/oder Mietpreises Fahrräder entliehen werden können, mit wenigstens einer Zentrale zur Überwachung des Entleihvorgangs und einer Mehrzahl von Fahrrädern. Dabei ist vorgesehen, dass wenigstens ein Fahrrad eine elektronische Kennung, ein drahtloses Übertragungsmodul und einen GPS-Chip aufweist, so dass die Kennung und Position des Fahrrades über das Übertragungsmodul an die Zentrale übertragbar sind.

Die US 2011/109206 A1 beschreibt einen Generator, der in einer Tretlagervorrichtung eines Fahrrades an einer Tretlagerwelle angeordnet ist.

Die DE 10 2011 079 094 A1 beschreibt einen Fahrradrahmen, mit mindestens einem Rahmenabschnitt, der zur abnehmbaren Halterung eines separaten Energiespeichers, insbesondere eines Batteriepacks, ausgebildet ist und der Befestigungsmittel und/oder Öffnungen zum Einsetzen solcher zur Fixierung des Energiespeichers aufweist, und einem Tretlagergehäuse, das zur alternativen Aufnahme eines Tretlagermotors oder eines mechanischen Tretlagers, insbesondere in Verbindung mit einem Adapterring, ausgebildet ist.

Es besteht die Aufgabe, eine flexible Möglichkeit zu finden, ein Fahrrad zu sichern.

Diese Aufgabe wird durch den Gegenstand des Anspruchs 1, eine Tretlagervorrichtung gelöst.

Dazu dient ein Mittel zur Sperrung einer Tretlagerwelle der Tretlagervorrichtung eines Fahrrades gegen eine Drehbewegung. Damit wird am Fahrrad selbst, nicht an einem externen Gegenstand, eine Sperrung vorgenommen. Eine gewaltsame Zerstörung der Tretlagervorrichtung eines Fahrrades wird in der Regel den Rahmen des Fahrrades unbrauchbar machen. Die Tretlagervorrichtung weist ferner eine Empfangsvorrichtung für ein drahtloses Signal auf, wobei die Sperrung und / oder die Entsperrung der Tretlagerwelle in Abhängigkeit vom Empfang, der Form und / oder des Inhalts des drahtlosen Signals steuerbar ist. Durch die Aktivierung oder Deaktivierung der Sperre durch ein drahtloses Signal werden keine zusätzlichen mechanischen Teile am Fahrrad benötigt. Die Tretlagerwelle ist zur Umwandung mechanischer Energie in elektrische Energie mit einem Generator in der Tretlagervorrichtung gekoppelt. Damit können Stromverbraucher im Umfeld der Tretlagervorrichtung (z.B. Sendevorrichtung, Empfängervorrichtung, Kommunikationsvorrichtung, GPS-System) mit Strom versorgt werden. Die Umwandlung mechanischer Energie in elektrische Energie erfolgt durch ein Drehen der Tretlagerwelle in Freilaufrichtung. Somit kann selbst bei gesperrter Tretlagerwelle, der Generator immer noch im Freilauf verwendet werden. Auch ist es möglich, dass die elektrische Energie zur Sperrung und / oder Entsperrung der Tretlagerwelle nutzbar ist. Die Stromversorgung kann aber auch für Stromverbraucher im Umfeld der Tretlagervorrichtung, insbesondere einer Sendevorrichtung, einer Empfängervorrichtung, einer Kommunikationsvorrichtung, eines GPS-System verwendbar sein. Somit kann z.B. elektrische Energie, die allein durch Drehung an der Tretlagerwelle erzeugt wurde, für die Sendung eines GPS-Signals verwendet werden.

Ein Formschlussmittel wird zur lösbaren Sperrung der Tretlagerwelle verwendet. Dabei weist das Formschlussmittel eine Profilierung auf, die in einer Drehrichtung der Tretlagerwelle eine Drehung der Tretlagerwelle erlaubt und in der entgegengesetzten Drehrichtung die Tretlagerwelle gegen eine Drehung sperrt. Das Formschlussmittel wirkt dabei z.B. mit einem Schlaghammer zur Sperrung zusammen. Auch kann das Formschlussmittel in der Art einer Sperrklinke oder Ratsche ausgebildet sein. Dabei könnte z.B. die reguläre Antriebsdrehrichtung der Tretlagerwelle blockieren lassen, während der Freilauf immer noch möglich wäre.

Die Sperrung und / oder Entsperrung der Tretlagerwelle für eine Drehrichtung ist z.B. durch eine magnetische und / oder eine Federkraft einstellbar und / oder lösbar. Das sperrende Element, z.B. die Sperrklinke, kann so in einfacher Weise bewegt und / oder in einer Position festgehalten werden.

Das drahtlose Signal zur Steuerung der Sperrung und / oder Entsperrung kann in einer Ausführungsform mittels NFC, RFID, Bluetooth, Zigbee, WiFi, SMS, einer drahtlosen Telefonverbindung und / oder einem Programm auf einem Mobiltelefon sendbar sein. Somit können sowohl Nahbereichskommunikationsmittel, als auch Fernbereichskommunikationsmittel verwendet werden.

Ferner weist eine Ausführungsform einen Bewegungsmelder zur Detektion einer räumlichen Bewegung der Tretlagervorrichtung und / oder eine Kopplung an ein GPS-System zur Bestimmung des geographischen Ortes der Tretlagervorrichtung auf. Durch beide Mittel können unabhängig voneinander oder auch gemeinsam Informationen über den Ort und / oder eine Ortsveränderung erhalten werden.

In einer Ausführungsform weist eine Tretlagerausführung eine Sendevorrichtung auf, mit der automatisch ein Ortsignal sendbar ist. Dieses kann Informationen zum geographischen Ort der Tretlagervorrichtung und / oder über dessen Ortsveränderung enthalten.

In einer Ausführungsform gibt die Sendevorrichtung automatisch ein Ortssignal ab, wenn der Bewegungsmelder und / oder das GPS-System eine räumliche Bewegung der Tretlagervorrichtung und / oder das Verlassen eines vordefinierten räumlichen Bereiches detektieren. Durch diese automatische Benachrichtigung kann ein Nutzer immer darüber informiert werden, wenn mit seinem Fahrrad mit der Tretlagervorrichtung etwas Ungeplantes passiert.

In einer Ausführungsform weist die Tretlagervorrichtung eine Kommunikationsvorrichtung zur Bestimmung der Kosten des Sendens des Ortssignals auf. Damit ist es z.B. möglich, dass die Kommunikationsvorrichtung den am jeweiligen geographischen Ort der Tretlagervorrichtung preisgünstigsten Kommunikationsweg für das Senden des Ortssignals auswählt. Damit wird z.B. der günstigste Weg zur Signalisierung des geographischen Ortes der Tretlagervorrichtung durch die Sendevorrichtung ausgewählt. Dabei kann die Kommunikationsvorrichtung zusätzlich oder alternativ automatisch Intervalle des Sendens des Ortssignals steuern, insbesondere in Abhängigkeit von dem Ladezustand einer Batterie. Wenn die Kommunikationsvorrichtung z.B. merkt, dass der Ladezustand der Batterie unter ein bestimmtes Level sinkt, kann die Senderate des Ortssignals herabgesetzt werden.

In einer weiteren Ausführungsform ist das Mittel zur Sperrung und / Entsperrung der Tretlagerwelle und / oder der Generator mit der Batterie gekoppelt ist, insbesondere einer aufladbaren Batterie. Damit kann notwendige elektrische Energie gespeichert werden. Dabei kann in einer Ausführungsform die wiederaufladbare Batterie durch eine Drehbewegung der Tretlagerwelle aufladbar sein, insbesondere durch eine Drehbewegung in Freilaufrichtung. Im letzteren Fall kann die Batterie z.B. auch bei in Fahrrichtung gesperrter Tretlagerwelle aufgeladen werden.

Des Weiteren kann in einer Ausführungsform die Empfängervorrichtung drahtlose Signale für eine vorbestimmte Gruppe von Nutzern erkennen und für diese eine Sperrung und / oder eine Entsperrung der Tretlagerwelle bewirken.

Die Aufgabe wird auch durch ein Fahrrad mit den Merkmalen des Anspruchs 16 und ein System mit den Merkmalen des Anspruchs 17 gelöst.

Bei dem System zur Lokalisierung mindestens eines Fahrrades weist das mindestens eine Fahrrad mindestens eine Tretlagervorrichtung gemäß den Ansprüchen 1 bis 15 auf. Dabei kann die mindestens eine Tretlagervorrichtung mit einer Sendevorrichtung ein Ortssignal senden. Damit kann eine Lokalisierung erfolgen.

Ausführungsformen der Erfindung werden im Zusammenhang mit der folgenden Zeichnung erläutert. Dabei zeigt
- Fig. 1: eine Detail-Schnittansicht einer Ausführungsform einer Tretlagervorrichtung:
- Fig. 2: eine Detail-Seitenansicht einer Achswelle.

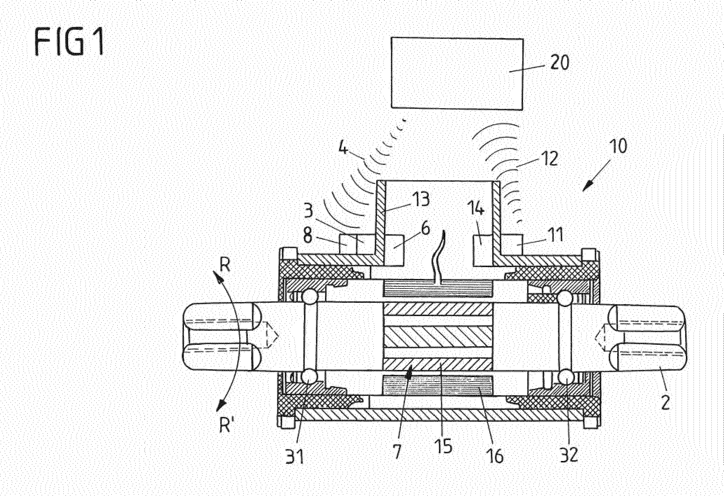

In Fig. 1 ist eine Schnittansicht durch eine Ausführungsform einer Tretlagervorrichtung 10 eines Fahrrades dargestellt. Dabei wird die Tretlagerwelle 2 von zwei Lagern 31, 32 in einem Tretlagergehäuse gelagert. In der hier gewählten Darstellung ist ein Teil des Rahmens 13 des Fahrrades erkennbar.

In an sich bekannter Weise sind an den beiden äußeren Enden der Tretlagerwelle 2 jeweils hier nicht dargestellte Tretkurbeln angeordnet. Dabei kann die Tretlagerwelle 2 bei Fahrrädern mit Freilauf in zwei Drehrichtungen R, R' gedreht werden. In einer ersten Drehrichtung R kann z.B. ein Drehmoment auf das hier nicht dargestellte Ritzel des Fahrrades aufgebracht werden, um das Fahrrad fortzubewegen. In der entgegengesetzten Drehrichtung R' kann die Tretlagerwelle 2 im Freilauf durchgedreht werden.

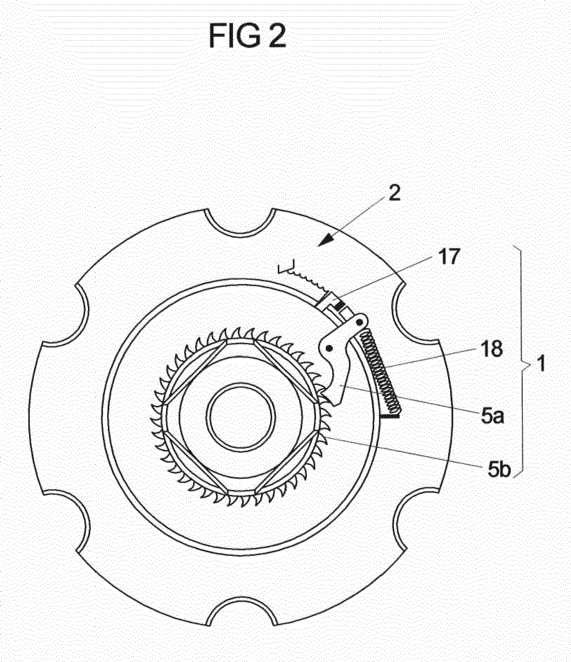

Die Ausführungsform der Tretlagervorrichtung 10 weist ein Mittel 1 zur Sperrung einer Drehbewegung der Tretlagerwelle 2 in einer ersten Drehrichtung R auf. Das Mittel 1 zur Sperrung der Drehbewegung weist hier ein Formschlussmittel 5a, 5b auf, bei dem eine Sperrklinke oder ein Schlaghammer 5a in eine entsprechende Profilierung 5b eingreifen (siehe z.B. Fig. 2). Zusätzlich oder alternativ kann das Mittel 1 zur Sperrung der Drehbewegung auch über ein Reibschlussmittel verfügen, mit dem eine Drehbewegung zumindest in der ersten Drehrichtung R der Tretlagerwelle 2 unterbunden werden kann.

Wenn die Sperrung der Tretlagerwelle 2 aktiviert ist, kann das Fahrrad nicht durch den eigenen Antrieb, d.h. das Treten in die Pedale, fortbewegt werden. Es kann aber sinnvoll sein, die entgegengesetzte Drehrichtung R' freibeweglich zu lassen.

Ferner weist die Tretlagervorrichtung 10 noch eine Empfangsvorrichtung 3 für drahtlose Signale 4 auf. In Abhängigkeit von empfangenen drahtlosen Signalen 4 kann die Tretlagerwelle 2 durch das Mittel 1 zur Sperrung der Drehbewegung gesperrt und / oder entsperrt werden. So kann das drahtlose Signal 4 das Mittel 1 zur Sperrung der Drehbewegung aktivieren, indem ein Einrasten der Sperrklinke in die Profilierung (d.h. eine Aktvierung des Formschlussmittels 5a, 5b) bewirkt wird. Ohne eine Entsperrung bleibt dann die Tretlagerwelle 2 gegen eine Drehbewegung in einer Drehrichtung R gesperrt.

Bei der hier betrachteten Ausführungsform kann die Betätigung des Mittels 1 zur Sperrung der Drehbewegung (z.B. der Sperrklinke) durch eine magnetische Kraft und / oder eine Federkraft ausgelöst werden. So kann z.B. die Sperrklinke durch eine elektrische Spule von einer ersten Lage (Sperrung) in eine zweite Lage (Entsperrung) gebracht werden (oder umgekehrt).

Die Steuerung dieser Betätigung des Mittels 1 zur Sperrung der Drehbewegung erfolgt in Abhängigkeit des drahtlosen Signals 4, das z.B. von einem RFID Tag eines Benutzers ausgelöst wird.

Wenn der Berechtigte in die Nähe der Tretlagervorrichtung 10 kommt, erkennt die Empfangsvorrichtung 3 das eingehende Signal 4 und veranlasst eine Sperrung oder Entsperrung.

Das drahtlose Signal 4 kann auch über eine andere drahtlose Kommunikation übertragen werden, wie z.B. NFC, Bluetooth, Zigbee, WiFi, SMS, eine drahtlose Telefonverbindung und / oder eine App auf einem Mobiltelefon. Damit kann ein Nutzer des Fahrrades schnell und kontaktlos die Tretlagervorrichtung 10 des Fahrrads freischalten oder sperren.

Dies ermöglicht z.B. die gemeinschaftliche Nutzung eines Fahrrads, d.h. die Bildung von Gruppen von Nutzern, die alle das Recht haben ein bestimmtes Fahrrad zu sperren / entsperren und letztendlich zu gebrauchen. Solche Gruppen sind zum Beispiel durch die Mitglieder einer Familie oder Wohngemeinschaft gegeben.

Dabei ist es über eine Sendevorrichtung 11 möglich, die Mitglieder der Gruppe automatisch zu benachrichtigen, wenn das Fahrrad belegt oder freigegeben wird. Außerdem kann die Reservierung des Fahrrads für Mitglieder der Gruppe durch eine Tretlagerblockade realisiert werden.

Des Weiteren weist die in Fig. 1 dargestellte Tretlagervorrichtung 10 noch einen Generator 9 zur Umwandlung von mechanische Energie in elektrische Energie auf. Auf der Tretlagerwelle 2 ist mittig ein Rotor 15 angeordnet, im Gehäuse der Tretlagevorrichtung 10 entsprechende Induktionsspulen 16. Zusammen wird ein Generator 7 gebildet, mit dem elektrische Energie zur Verfügung gestellt wird. Diese Energie kann in einer aufladbaren Batterie 8 gespeichert werden. Dabei kann es von Vorteil sein, dass der Generator 9 unabhängig von der Drehrichtung R, R' Strom erzeugt,

Der typische Ablauf einer Aktivierung bzw. Deaktivierung der elektronischen Sperre kann wie folgt aussehen:
1) Der Nutzer schickt eine drahtlose Anfrage (d.h. das drahtlose Signal 4) zum (Ent-)Sperren der Tretlagervorrichtung, z.B. mittels eines RFID-Tags oder über eine Smartphone APP, die über WiFi, Bluetooth oder Mobilfunk (GSM/GPRS/UMTS/LTE) mit der Elektronik des Fahrrads kommuniziert.
   Falls die Tretlagerwelle 2 gesperrt und die Batterie 8 leer ist, besteht die Möglichkeit durch eine Rückwärtsdrehung der Pedalarme die notwendige Energie zur Entsperrung mit dem integrierten Generator 9 zu erzeugen. Hier zeigt sich, dass die Sperrung der Drehbewegung nur in einer Drehrichtung R sinnvoll sein kann. Im freigegebenen Freilauf kann das Fahrrad nicht durch eigenen Antrieb fortbewegt werden, wohl aber kann der integrierte Generator 8 benutzt werden, um zumindest für eine gewisse Zeit Strom zur Verfügung zu haben. Der Strom wird in der Batterie 8 gespeichert, so dass nach einigen Umdrehung der Tretlagerwelle 2 ausreichend Energie zur Verfügung steht, den Sperr- oder Entsperrvorgang durch zu führen.
2) Die Empfangsvorrichtung 3 mit einem Mikrocontroller bekommt die Anfrage mit den dazugehörigen Nutzerdaten und gleicht Letztere mit den Nutzerdaten (z.B. PGP, RFID) ab, die in einem Speichermodul der Empfangsvorrichtung 3 gehalten werden. Zusätzlich ist noch eine Überprüfung möglich, ob das Fahrrad schon für eine andere Person reserviert ist. Entsprechend kann der Zugang verweigert oder gewährt werden.
3) Falls der Nutzer, der die Anfrage geschickt hat, die geforderten Berechtigungen besitzt, wird die Tretlagervorrichtung 10 entsperrt oder gesperrt
4} Optional kann abschließend eine Benachrichtigung an die anderen Fahrradfahrer aus der Gruppe geschickt werden.

Die aktuell bei Fahren des Fahrrades erzeugte elektrische Energie und / oder die Energie aus der Batterie 8 können z.B. dazu verwendet werden, um ein GPS-System 6, das im Rahmen 13 des Fahrrades angeordnet ist mit Energie zu versorgen. Eine mögliche Verwendung eines solchen GPS-Systems wird in der Folge dargestellt. Dabei werden an den passenden Stellen im Fahrradrahmen kleine Löcher gebohrt, um die benötigten Antennen optimal anzubringen.

Falls ein Fahrrad unbefugt ohne Betätigung der Tretlagervorrichtung 10 weggetragen oder abtransportiert wird, kann eine weitere Sicherungsmaßnahme greifen, die ein GPS-System 6 verwendet.

Die hier beschriebenen Ausführungsformen können in einem Gesamtkonzept zur Absicherung von Fahrrädern gegen Diebstahl und verbesserte Auffindbarkeit von gestohlenen Fahrrädern verwendet werden. Die Gesamtlösung kann dabei durch die Verwendung elektronischer Komponenten realisiert werden, die in verschiedenen Teilen eines Fahrrads fest einzubauen sind.

In diesem Fall bietet eine Ausführungsform die Möglichkeit an, kostengünstig und zeitnah den Fahrradbesitzer über den Diebstahl seines Fahrrades zu informieren und die Position des geklauten Fahrrads auch im Ausland zu erfragen oder zu verfolgen. Dazu ist das GPS-System 6 in der Tretlagervorrichtung 10 des Fahrrads angeordnet, mit dem die Daten eines GPS-Satelliten (z.B. GPS, Galileo, GLONASS) und die Sendevorrichtung 11 (z.B. eines Mobilfunkmoduls mit GSA/UMTS/LTE) intelligent miteinander verbunden sind.

So kann in dem GPS-System 6 ein Bereich, z.B. ein Kreis mit einem Radius um den Wohnort, festgelegt werden, wobei ein Verlassen des Bereiches dazu führt, dass automatisch ein Warnsignal der Sendevorrichtung 11 durch das GPS-System 6 veranlasst wird.

Des Weiteren kann mit einer Kommunikationsvorrichtung 14 automatisch entscheiden werden, wie der Fahrradbesitzer informiert wird. Die Benachrichtigung soll sowohl im Inland, als auch im Ausland möglichst kosteneffizient möglich sein, so dass jeweils das kostengünstigste Verfahren eines Ortssignals 12 wählbar ist, dass über die Sendevorrichtung 11 abgestrahlt werden kann. So wird z.B. von der Kommunikationsvorrichtung 14 eine Abwägung vorgenommen, ob die Versendung einer SMS oder eine Internet Datenkommunikation (z.B. via HTTP/REST) günstiger ist. Die kann z.B. davon abhängen, ob die Tretlagervorrichtung 10 zu der Zeit in der Nähe einer WiFi Vorrichtung steht, über die eine Internet basierte Datenkommunikation günstiger ist, als eine SMS.

Als Inhalt des Ortsignals 12 (z.B. einer SMS oder Internet basierte Datenkommunikation) erhält der Besitzer den genauen geographischen Standort der Tretlagervorrichtung 10 mit weiteren hilfreichen Informationen, um sein Fahrrad nachverfolgen zu können. Mit Hilfe eines Tokens oder einer Smartphone-App, die zum Beispiel auch zum Aktivieren dieser Funktion genutzt werden können, kann sich der Fahrradbesitzer dann auch als dieser identifizieren. Weiterhin ist wichtig, wie die benötigten Komponenten mit Energie versorgt werden sollen. Der Fahrradbesitzer soll auch die Möglichkeit bekommen die Ortung seines Fahrrads aktiv zu starten.

Der Ablauf wird im Folgenden beispielhaft beschrieben. Vorausgesetzt, dass die elektronische Tretlagersperre eingeschaltet ist, und das Fahrrad beim Diebstahl nicht weggefahren, sondern weggetragen oder in ein Fahrzeug geladen wird, startet sich automatisch das Fahrradtracking. Dementsprechend passiert Folgendes:
1) Bei einer ersten Bewegung der Tretlagervorrichtung 10 - und damit des Fahrrades - wird die eine externe Stelle 20 (z.B. Fahrradbesitzer, eine Zentrale) durch die Sendevorrichtung 12 benachrichtigt.
   Diesbezüglich bestehen zwei Möglichkeiten:
   a. Der Fahrradbesitzer bekommt eine SMS-Nachricht auf sein Handy, dass sein Fahrrad bewegt wurde.
   b. Wenn sich der Besitzer aber eine App für sein Smartphone heruntergeladen hat und die Internetkosten geringer als die SMS Kosten sind (was derzeit innerhalb Deutschlands zum größten Teil der Fall ist), dann bekommt er eine Push-Nachricht über diese App. Danach kann sich der Besitzer in die vorhandene App oder in ein Onlineportal einloggen, um sich die Daten, wo sich sein Fahrrad befindet, anzusehen.

   Die Entscheidung, welche Möglichkeit gewählt wird, wird von der Kommunikationsvorrichtung 14 vorgenommen.
2) Das GPS-System 6 der Tretlagervorrichtung 10 sendet regelmäßig Nachrichten über die geographischen Koordinaten des Fahrrades. Anhand des Prepaidguthabens auf einer eingebauten SIM-Karte berechnet die Kommunikationsvorrichtung 14 die verfügbaren restlichen Nachrichten und passt die Sende-Intervalle intelligent an. Dabei wird intelligent unter Berücksichtigung der anfallenden Kosten die Art von
   Nachrichten ausgesucht - SMS oder Internet Verbindung. In jeder Nachricht ist neben den Koordinaten des Fahrrades auch noch das restliche Guthaben auf der Karte und der Akkuladezustand enthalten. Das Guthaben der SIM-Karte kann bei Bedarf online aufgeladen werden.
3) Weitere feste Zeitpunkte, an denen die Sendevorrichtung Nachrichten verschickt, sind wenn:
   a. sich das Fahrrad eine festgelegte Zeit nicht mehr bewegt hat,
   b. sich das Fahrrad nach dieser Zeit wieder bewegt,
   c. die Batterie 8 in einen vorbestimmten kritischen Bereich gelangt ist (z.B. fast leer) oder
   d. die aufladbare Batterie 8 nachdem sie leer war zum ersten Mal wieder Energie hat. Die Batterie 8 wird automatisch über das Tretlager geladen, wenn sich das Fahrrad in Bewegung befindet - falls die Tretlagerblockade entsperrt worden ist, oder falls die Pedalarme rückwärts gedreht worden sind - dies kann auch zufällig beispielsweise während des Transports vom geklauten Fahrrad passieren.

Als zusätzliches Merkmal kann der Fahrradbesitzer auch sein Fahrrad, genaugenommen die verbaute SIM-Karte, aktiv anrufen. Daraufhin wird von Sendeeinheit 12 bei ausreichendem Guthaben und Akku eine Nachricht versendet.

Wenn man einige der beschriebenen Ausführungsformen miteinander kombiniert, kann in der Summe ein intelligentes Fahrradmanagementsystem geschaffen werden, dass folgende Funktionen erfüllen kann:
1) eine bequem handhabbare und einschaltbare Diebstahlsicherung auf der Basis einer elektronischen Tretlagersperre,
2) die gemeinschaftliche Nutzung von privaten Fahrrädern auf der Basis der Identifikation von berechtigten Fahrradfahrern und entsprechendes Ein- und Ausschalten der elektronischen Tretlagersperre, und
3) eine auch im Ausland kostengünstige und zeitlich ausgedehnte Auffindbarkeit von gestohlenen Fahrrädern.

In Fig. 2 ist eine Ausführungsform für ein Formschlussmittel 5a, 5b zur lösbaren Sperrung der Tretlagerwelle 2 dargestellt. Dabei wird die Tretlagerwelle 2 in einer Seitenansicht dargestellt. Mit der Tretlagerwelle 2 ist ein hier zweiteilig ausgebildetes Formschlussmittel 5a, 5b verbunden, das einen Schlaghammer 5a und eine Einrastverzahnung 5b aufweist. Der Schlaghammer 5a kann formschlüssig in die Einrastverzahnung 5b eingreifen und damit die Drehung der Tretlagerwelle 2 blockieren. Der Schlaghammer 5a befindet sich im Normalbetrieb nicht im Eingriff mit der Einrastverzahnung 5b, da er durch einen elektrischen Schaltmagneten 17 - entgegen einer Federvorspannung durch eine Zugfeder 18 - in der Nicht-Eingriffslage gehalten wird. Gibt der elektrische Schaltmagnet 17 den Schlaghammer 5a frei, so wird der Schlaghammer 5a durch die Zugfeder 18 in den Eingriff gebracht. Damit ist dann die Tretlagewelle 2 gesperrt. Zum Entsperren wird der elektrische Schaltmagnet 17 aktiviert, so dass der Schlaghammer 5a wieder aus der Einrastverzahnung 5b ausgerückt wird.

### Bezugszeichenliste

- 1: Mittel zur Sperrung der Tretlagerwelle
- 2: Tretlagerwelle
- 3: Empfangsvorrichtung
- 4: drahtloses Signal
- 5a: Formschlussmittel, Schlaghammer
- 5b: Formschlussmittel, Einrastverzahnung, Profilierung
- 6: GPS-System
- 7: Generator
- 8: Batterie

- 10: Tretlagervorrichtung
- 11: Sendevorrichtung
- 12: Ortssignale
- 13: Rahmen
- 14: Kommunikationsvorrichtung
- 15: Rotor
- 16: Induktionsspulen
- 17: elektrischer Schaltmagnet
- 18: Zugfeder
- 20: externe Stelle

- 31: erstes Lager
- 32: zweites Lager

- R: Drehbewegung in einer ersten Richtung
- R': Drehbewegung entgegengesetzt der ersten Richtung

## Patentansprüche

1. Tretlagervorrichtung für ein Fahrrad, mit
einem Mittel (1) zur Sperrung einer Tretlagerwelle (2) der Tretlagervorrichtung (10) gegen eine Drehbewegung (R),
und einer Empfangsvorrichtung (3), zum Empfang eines drahtlosen Signals (4),
wobei die Sperrung und / oder die Entsperrung der Tretlagerwelle (2) in Abhängigkeit vom Empfang, der Form und / oder des Inhalts des drahtlosen Signals (4) steuerbar ist, **dadurch gekennzeichnet, dass** die Tretlagerwelle (2) zur Umwandung mechanischer Energie in elektrische Energie mit einem Generator (7) in der Tretlagervorrichtung (10) gekoppelt ist und die Umwandlung mechanischer Energie in elektrische Energie durch ein Drehen der Tretlagerwelle (2) in Freilaufrichtung (R') erfolgt, und
die Tretlagervorrichtung (10) ein Formschlussmittel (5a, 5b) zur lösbaren Sperrung der Tretlagerwelle (2) aufweist, wobei das Formschlussmittel (5a, 5b) eine Profilierung aufweist, die in einer Drehrichtung (R) der Tretlagerwelle (2) eine Drehung der Tretlagerwelle (2) erlaubt und in der entgegengesetzten Drehrichtung (R') die Tretlagerwelle (2) gegen eine Drehung sperrt.

2. Tretlagervorrichtung nach Anspruch 1, **dadurch gekennzeichnet, dass** das Formschlussmittel (5a, 5b) mit einem Schlaghammer zur Sperrung zusammenwirkt.

3. Tretlagervorrichtung nach Anspruch 1 oder 2, **dadurch gekennzeichnet, dass** das Formschlussmittel (5a, 5b) in der Art einer Sperrklinke oder Ratsche ausgebildet ist.

4. Tretlagervorrichtung nach mindestens einem der vorhergehenden Ansprüche, **dadurch gekennzeichnet, dass** die Sperrung und / oder Entsperrung der Tretlagerwelle (2) für eine Drehrichtung (R, R') durch eine magnetische und / oder eine Federkraft einstellbar und / oder lösbar ist.

5. Tretlagervorrichtung nach mindestens einem der vorhergehenden Ansprüche, **dadurch gekennzeichnet, dass** das drahtlose Signal (4) mittels NFC, RFID, Bluetooth, Zigbee, WiFi, SMS, eine drahtlose Telefonverbindung und / oder einem Programm auf einem Mobiltelefon sendbar ist.

6. Tretlagervorrichtung nach mindestens einem der vorhergehenden Ansprüche, **gekennzeichnet durch** einen Bewegungsmelder (17) zur Detektion einer räumlichen Bewegung der Tretlagervorrichtung (10) und / oder
eine Kopplung an ein GPS-System (6) zur Bestimmung des geographischen Ortes der Tretlagervorrichtung (10).

7. Tretlagervorrichtung nach mindestens einem der vorhergehenden Ansprüche, **gekennzeichnet durch** eine Sendevorrichtung (11) zur automatischen Sendung eines Ortsignals (12) mit Informationen zum geographischen Ort der Tretlagervorrichtung (10) und / oder zur Änderung des geographischen Ortes.

8. Tretlagervorrichtung nach Anspruch 7, **dadurch gekennzeichnet, dass** die Sendevorrichtung (4) automatisch ein Ortssignal (12) abgibt, wenn der Bewegungsmelder (17) und / oder das GPS-System (6) eine räumliche Bewegung der Tretlagervorrichtung (10) und / oder das Verlassen eines vordefinierten räumlichen Bereiches detektieren.

9. Tretlagervorrichtung nach Anspruch 7 oder 8, **gekennzeichnet durch** eine Kommunikationsvorrichtung (14) zur Bestimmung der Kosten des Sendens des Ortssignals (12).

10. Tretlagervorrichtung nach Anspruch 9, **dadurch gekennzeichnet dass** die Kommunikationsvorrichtung (14) den am jeweiligen geographischen Ort der Tretlagervorrichtung (10) preisgünstigsten Kommunikationsweg zur Sendung des Ortsignals (12) wählt.

11. Tretlagervorrichtung nach Anspruch 9 oder 10, **dadurch gekennzeichnet, dass** die Kommunikationsvorrichtung(14) automatisch Intervalle des Sendens des Ortssignals (12) steuert, insbesondere in Abhängigkeit von dem Ladezustand einer Batterie (8).

12. Tretlagervorrichtung nach mindestens einem der vorhergehenden Ansprüche, **dadurch gekennzeichnet, dass** die elektrische Energie zur Sperrung und / oder Entsperrung der Tretlagerwelle (2) und / oder zur Stromversorgung von Stromverbrauchern im Umfeld der Tretlagervorrichtung, insbesondere einer Sendevorrichtung, einer Empfängervorrichtung, einer Kommunikationsvorrichtung, eines GPS-System verwendbar ist.

13. Tretlagervorrichtung nach mindestens einem der vorhergehenden Ansprüche, **dadurch gekennzeichnet, dass** das Mittel (1) zur Sperrung und / Entsperrung der Tretlagerwelle (2) und / oder der Generator (7) mit einer Batterie (8) gekoppelt ist, insbesondere einer aufladbaren Batterie (8).

14. Tretlagervorrichtung nach Anspruch 13, **dadurch gekennzeichnet, dass** die wiederaufladbare Batterie (8) durch eine Drehbewegung (R, R') der Tretlagerwelle (2) aufladbar ist, insbesondere durch eine Drehbewegung in Freilaufrichtung (R').

15. Tretlagervorrichtung nach mindestens einem der vorhergehenden Ansprüche, **dadurch gekennzeichnet, dass** die Empfängervorrichtung (3) drahtlose Signale (4) für eine vorbestimmte Gruppe von Nutzern erkennt und für diese eine Sperrung und / oder eine Entsperrung der Tretlagerwelle (2) bewirkt.

16. Fahrrad mit mindestens einer Tretlagervorrichtung nach mindestens einem der Ansprüche 1 bis 15.

17. System zur Lokalisierung mindestens eines Fahrrades **dadurch gekennzeichnet, dass**
das mindestens eine Fahrrad mindestens eine Tretlagervorrichtung (10) gemäß den Ansprüchen 1 bis 15 aufweist und die mindestens eine Tretlagervorrichtung (10) mit einer Sendevorrichtung (11) ein Ortssignal (12) sendet.

## Claims

1. Bottom bracket device for a bicycle, with a means (1) for blocking a bottom bracket shaft (2) of the bottom bracket device (10) against a rotational movement (R), and a receiving device (3) for receiving a wireless signal (4),
**characterized in that** the blocking and/or the unblocking of the bottom bracket shaft (2) can be controlled depending on the reception, the form and/or the content of the wireless signal (4), **characterized in that**
the bottom bracket shaft (2) for converting mechanical energy into electrical energy is coupled to a generator (7) in the bottom bracket device (10), and the conversion of mechanical energy into electrical energy takes place by rotation of the bottom bracket shaft (2) in a freewheeling direction (R'), and
the bottom bracket device (10) has a positive-locking means (5a, 5b) for the releasable blocking of the bottom bracket shaft (2), wherein the positive-locking means (5a, 5b) has a profiling which permits rotation of the bottom bracket shaft (2) in one direction of rotation (R) of the bottom bracket shaft (2) and, in the opposite direction of rotation (R'), blocks the bottom bracket shaft (2) against rotation.

2. Bottom bracket device according to claim 1,
**characterized in that** the positive-locking means (5a, 5b) interacts with a bell hammer for the blocking.

3. Bottom bracket device according to claim 1 or 2,
**characterized in that** the positive-locking means (5a, 5b) is designed in the manner of a pawl or ratchet.

4. Bottom bracket device according to at least one of the preceding claims, **characterized in that** the blocking and/or unblocking of the bottom bracket shaft (2) for a rotational movement (R, R') can be set and/or can be released by a magnetic force and/or a spring force.

5. Bottom bracket device according to at least one of the preceding claims, **characterized in that** the wireless signal (4) can be transmitted by means of NFC, RFID, Bluetooth, Zigbee, WiFi, SMS, a wireless telephone connection and/or a program on a mobile telephone.

6. Bottom bracket device according to at least one of the preceding claims, **characterized by** a motion detector (17) for detecting a spatial movement of the bottom bracket device (10) and/or by a coupling to a GPS system (6) for determining the geographical location of the bottom bracket device (10).

7. Bottom bracket device according to at least one of the preceding claims, **characterized by** a transmitting device (11) for automatically transmitting a location signal (12) with information on the geographical location of the bottom bracket device (10) and/or for changing the geographical location.

8. Bottom bracket device according to claim 7,
**characterized in that** the transmitting device (4) automatically outputs a location signal (12) when the movement detector (17) and/or the GPS system (6) detect a spatial movement of the bottom bracket device (10) and/or the leaving of a predefined spatial region.

9. Bottom bracket device according to claim 7 or 8,
**characterized by** a communication device (14) for determining the costs of transmitting the location signal (12) .

10. Bottom bracket device according to claim 9,
**characterized in that** the communication device (14) selects the most cost-favourable communication route at the respective geographical location of the bottom bracket device (10) for transmitting the location signal (12) .

11. Bottom bracket device according to Claim 9 or 10,
**characterized in that** the communication device (14) automatically controls intervals for transmitting the location signal (12), in particular depending on the charging state of a battery (8).

12. Bottom bracket device according to at least one of the preceding claims, **characterized in that** the electrical energy can be used for blocking and/or unblocking the bottom bracket shaft (2) and/or for the current supply of current consumers in the environment of the bottom bracket device, in particular a transmitting device, a receiver device, a communication device, a GPS system.

13. Bottom bracket device according to at least one of the preceding claims, **characterized in that** the means (1) for blocking and/or unblocking the bottom bracket shaft (2) and/or the generator (7) is coupled to a battery (8), in particular to a chargeable battery (8).

14. Bottom bracket device according to claim 13,
**characterized in that** the rechargeable battery (8) can be charged by a rotational movement (R, R') of the bottom bracket shaft (2), in particular by a rotational movement in a freewheeling direction (R').

15. Bottom bracket device according to at least one of the preceding claims, **characterized in that** the receiver device (3) recognizes wireless signals (4) for a predetermined group of users and brings about blocking and/or unblocking of the bottom bracket shaft (2) for them.

16. Bicycle with at least one bottom bracket device according to at least one of claims 1 to 15.

17. System for localizing at least one bicycle,
**characterized in that** the at least one bicycle has at least one bottom bracket device (10) according to claims 1 to 15 and the at least one bottom bracket device (10) transmits a location signal (12) with a transmitting device (11).

## Revendications

1. Dispositif de palier de pédalier pour bicyclette, comprenant un moyen (1) destiné à verrouiller un arbre de palier de pédalier (2) du dispositif de palier de pédalier (10) contre un mouvement de rotation (R) et un dispositif de réception (3) destiné à recevoir un signal sans fil (4),
**caractérisé en ce que** le verrouillage et/ou le déverrouillage de l'arbre de palier de pédalier (2) peut être commandé en fonction de la réception, de la forme et/ou du contenu du signal sans fil (4),
l'arbre de palier de pédalier (2) est couplé à un générateur (7) dans le dispositif de palier de pédalier (10) pour convertir l'énergie mécanique en énergie électrique et la conversion de l'énergie mécanique en énergie électrique s'effectue par rotation de l'arbre de palier de pédalier (2) dans le sens de roue libre (R'), et
le dispositif de palier de pédalier (10) comporte un moyen à complémentarité de forme (5a, 5b) destiné à verrouiller de manière amovible l'arbre de palier de pédalier (2), dans lequel le moyen à complémentarité de forme (5a, 5b) présente un profilage qui permet une rotation de l'arbre de palier de pédalier (2) dans un sens de rotation (R) de l'arbre de palier de pédalier (2) et verrouille l'arbre de palier de pédalier (2) dans le sens de rotation inverse (R').

2. Dispositif de palier de pédalier selon la revendication 1, **caractérisé en ce que** le moyen à complémentarité de forme (5a, 5b) coopère avec un marteau à percussion pour le verrouillage.

3. Dispositif de palier de pédalier selon la revendication 1 ou 2, **caractérisé en ce que** le moyen à complémentarité de forme (5a, 5b) est réalisé sous la forme d'un cliquet ou d'un rochet.

4. Dispositif de palier de pédalier selon au moins l'une des revendications précédentes, **caractérisé en ce que** le verrouillage et/ou le déverrouillage de l'arbre de palier de pédalier (2) pour un sens de rotation (R, R') peut être réglé et/ou déclenché par une force magnétique et/ou élastique.

5. Dispositif de palier de pédalier selon au moins l'une des revendications précédentes, **caractérisé en ce que** le signal sans fil (4) peut être transmis par NFC, RFID, Bluetooth, Zigbee, WiFi, SMS, une connexion téléphonique sans fil et/ou un programme sur un téléphone mobile.

6. Dispositif de palier de pédalier selon au moins l'une des revendications précédentes, **caractérisé par** un détecteur de mouvement (17) destiné à détecter un mouvement spatial du dispositif de palier de pédalier (10) et/ou par un couplage avec un système GPS (6) destiné à déterminer la position géographique du dispositif de palier de pédalier (10).

7. Dispositif de palier de pédalier selon au moins l'une des revendications précédentes, **caractérisé par** un dispositif d'émission (11) destiné à émettre automatiquement un signal de position (12) contenant des informations concernant la position géographique du dispositif de palier de pédalier (10) et/ou destiné à modifier la position géographique.

8. Dispositif de palier de pédalier selon la revendication 7, **caractérisé en ce que** le dispositif d'émission (4) émet automatiquement un signal de position (12) lorsque le détecteur de mouvement (17) et/ou le système GPS (6) détectent un mouvement spatial du dispositif de palier de pédalier (10) et/ou le fait de quitter une zone spatiale prédéfinie.

9. Dispositif de palier de pédalier selon la revendication 7 ou 8, **caractérisé par** un dispositif de communication (14) destiné à déterminer le coût de l'émission du signal de position (12).

10. Dispositif de palier de pédalier selon la revendication 9, **caractérisé en ce que** le dispositif de communication (14) sélectionne le trajet de communication le moins cher à la position géographique respective du dispositif de palier de pédalier (10) pour émettre le signal de position (12).

11. Dispositif de palier de pédalier selon la revendication 9 ou 10, **caractérisé en ce que** le dispositif de communication (14) commande automatiquement des intervalles d'émission du signal de position (12), en particulier en fonction de l'état de charge d'une batterie (8).

12. Dispositif de palier de pédalier selon au moins l'une des revendications précédentes, **caractérisé en ce que** l'énergie électrique peut être utilisée pour verrouiller et/ou déverrouiller l'arbre de palier de pédalier (2) et/ou pour alimenter des dispositifs consommateurs électriques situés à proximité du dispositif de palier de pédalier, notamment un dispositif d'émission, un dispositif de réception, un dispositif de communication ou un système GPS.

13. Dispositif de palier de pédalier selon au moins l'une des revendications précédentes, **caractérisé en ce que** le moyen (1) destiné à verrouiller et/ou déverrouiller l'arbre de palier de pédalier (2) et/ou le générateur (7) est couplé à une batterie (8), en particulier à une batterie (8) rechargeable.

14. Dispositif de palier de pédalier selon la revendication 13, **caractérisé en ce que** la batterie rechargeable (8) peut être chargée par un mouvement de rotation (R, R') de l'arbre de palier de pédalier (2), en particulier par un mouvement de rotation dans le sens de roue libre (R').

15. Dispositif de palier de pédalier selon au moins l'une des revendications précédentes, **caractérisé en ce que** le dispositif de réception (3) reconnaît des signaux sans fil (4) pour un groupe prédéterminé d'utilisateurs et produit pour ceux-ci un verrouillage et/ou un déverrouillage de l'arbre de palier de pédalier (2).

16. Bicyclette comportant au moins un dispositif de palier de pédalier selon au moins l'une des revendications 1 à 15.

17. Système de localisation d'au moins une bicyclette, **caractérisé en ce que** l'au moins une bicyclette comporte au moins un dispositif de palier de pédalier (10) selon les revendications 1 à 15 et l'au moins un dispositif de palier de pédalier (10) émet un signal de position (12) au moyen d'un dispositif d'émission (11).
